# EUROPEAN PATENT APPLICATION

(11) **EP 4 053 205 A1**
(43) Date of publication of application: **07.09.2022**
(21) Application number: 20880659.6
(22) Date of filing: 12.10.2020
(51) Int. Cl.: C08K 9/06, C08L 83/07, C08L 101/02

(54) **RESIN COMPOSITION**

(30) Priority: 30.10.2019 JP 2019197901
(71) Applicant: ThreeBond Co., Ltd., Tokyo 192-0398 (JP)
(72) Inventor: HASHIMOTO Takahiro, Hachioji-shi, Tokyo 192-0398 (JP); SOGA Tetsunori, Hachioji-shi, Tokyo 192-0398 (JP)
(74) Representative: Winter, Brandl - Partnerschaft mbB
(86) International application number: PCT/JP2020/038514
(87) International publication number: WO 2021/085103

(57) **Abstract**

The present invention relates to a cuarable resin composition, etc., having excellent in applicability and workability. Specifically, the present invention relates to a resin composition, etc., comprising: one or more base polymers selected from the group consisting of (A) a polymer having two or more alkenyl groups and (B) a polyorganosiloxane having a hydroxyl group bound to a silicon atom; (C) a silica powder surface-treated with an alkyl silane; and (D) a compound comprising one or more elements selected from the group consisting of boron, phosphorus, sulfur, and nitrogen.

## Description

### Technical Field

The present invention relates to a resin composition excellent in applicability and workability.

### Background Art

For adhesives, sealants, coating agents, and the like, it is a general practice to adjust the viscosity and the thixotropy in order to improve the workability at the time of the application. Particularly, it is an essential technique in using adhesives and sealants to increase the thixotropy to adjust the flowability, making it possible to apply a resin onto a vertical surface and preventing the resin from flowing into unnecessary areas, resulting in failure. As general approaches to increasing thixotropy, various approaches have been conducted, such as a method that adds a filler to an adhesive or a sealant and a method that adds a compound that has poor compatibility with a binder resin serving as a base to an adhesive or a sealant to chemically cause repulsion with the resin serving as the base, thus expressing thixotropy (Patent Literature 1).

### Citation List

### Patent Literatures

Patent Literature 1: Japanese Patent Application Publication No. 2015-010131

### Summary of Invention

However, in the conventional method that adds a filler, since the viscosity is increased by an increase in content of the filler, there are problems that the discharge using a dispenser becomes difficult or that the workability significantly decreases to cause clogging in a screen printing and the like when the content of the filler exceeds a certain amount. In addition, in the method that adds a compound that has poor compatibility with a binder resin serving as a base to improve thixotropy, there are problems that the resin after application causes bleed out with elapse of time, leading to curing failure, and the like.

As a result of earnestly studying in order to solve the above problems, the present inventors have found an approach to obtaining a resin composition excellent in applicability and workability by effectively imparting thixotropy while suppressing an increase in viscosity, and achieved the present invention. Note that the thixotropy is also called thioxotropy or a thixotropic property, and when the thixotropy is better, the viscosity of a paint becomes lower in a high shear rate state like when the paint is applied, while the viscosity of the paint becomes higher in a low shear rate state like after the application, so that appropriate application can be completed without allowing the paint after the application to flow down (sag).

The invention of the present application may be any of the following [1] to [13]. What are obtained by combining specific elements described in [1] to [13] as appropriate are also encompassed within the range of the invention of the present application.
[1] A resin composition comprising:
   one or more base polymers selected from the group consisting of (A) a polymer having two or more alkenyl groups and (B) a polyorganosiloxane having a hydroxyl group bound to a silicon atom;
   (C) a silica powder surface-treated with an alkyl silane; and
   (D) a compound comprising one or more elements selected from the group consisting of boron, phosphorus, sulfur, and nitrogen.
[2] The resin composition according to the above [1], wherein
   the component (D) is an acid or an acid ester compound.
[3] The resin composition according to the above [1], wherein
   the component (D) is selected from the group consisting of boric acid, borate ester, phosphoric acid, phosphate ester, sulfuric acid, and nitric acid.
[4] The resin composition according to any one of the above [1] to [3], wherein
   the silica powder of the component (C) is a fumed silica powder.
[5] The resin composition according to any one of the above [1] to [4], wherein
   the component (C) is a silica powder surface-treated with octyl-silane.
[6] The resin composition according to any one of the above [1] to [5], wherein
   the component (A) is a vinyl polymer (A-1) having two or more alkenyl groups or a polyorganosiloxane (A-2) having two or more alkenyl groups.
[7] The resin composition according to any one of the above [1] to [6], wherein
   a mass ratio of the component (C) : the component (D) is 9:1 to 1:9.
[8] A curable resin composition comprising:
   the resin composition according to any one of the above [1] to [7];
   a cross-linking agent; and
   a curing catalyst.
[9] A cured product obtained by curing the curable resin composition according to the above [8].
[10] An adhesive comprising:
   the curable resin composition according to the above [8].
[11] A sealant comprising:
   the curable resin composition according to the above [8].
[12] A method for producing a resin composition comprising:
   mixing
   one or more base polymers selected from the group consisting of (A) a polymer having two or more alkenyl groups and (B) a polyorganosiloxane having a hydroxyl group bound to a silicon atom,
   (C) a silica powder surface-treated with an alkyl silane, and
   (D) one or more compounds selected from the group consisting of acids each comprising one or more elements selected from the group consisting of boron, phosphorus, sulfur, and nitrogen, and derivatives thereof.
[13] A method for producing a cured product comprising the steps of:
   producing a resin composition by mixing
      one or more base polymers selected from the group consisting of (A) a polymer having two or more alkenyl groups and (B) a polyorganosiloxane having a hydroxyl group bound to a silicon atom,
      (C) a silica powder surface-treated with an alkyl silane, and
      (D) one or more compounds selected from the group consisting of acids each comprising one or more elements selected from the group consisting of boron, phosphorus, sulfur, and nitrogen, and derivatives thereof;
   mixing the resin composition with a cross-linking agent and a curing catalyst; and
   producing a cured product by curing the resin composition, under a condition of a curing temperature of 30 to 300°C in a case where the component (A) is used as the base polymer, or under a condition of a curing temperature of 10 to 50°C in the presence of water vapor in a case where the component (B) is used as the base polymer.

Since the resin composition of the present invention enables thixotropy to be adjusted without increasing viscosity, does not cause bleed out with time, and is excellent in shape retaining property after application, the resin composition of the present invention is very useful in improving applicability and workability.

### Description of Embodiments

Next, the detail of the present invention will be described. Note that preferable aspects, more preferable aspects, and the like exemplified below can be combined with one another as appropriate and used regardless of the expressions of "preferable", "more preferable", and the like. In addition, the descriptions of ranges of numerical values are examples, and ranges obtained by combining as appropriate the upper limit and the lower limit of each range as well as numerical values of Examples can be favorably used regardless of the expressions of "preferable", "more preferable", and the like. Moreover, terms such as "contain" and "comprise" may be read as "consist essentially of" or "consist only of" as appropriate.

### <Resin Composition>

One of aspects of the present invention is a resin composition comprising:
one or more base polymers selected from the group consisting of (A) a polymer having two or more alkenyl groups and (B) a polyorganosiloxane having a hydroxyl group bound to a silicon atom;
(C) a silica powder surface-treated with an alkyl silane; and
(D) one or more compounds selected from the group consisting of acids each comprising one or more elements selected from the group consisting of boron, phosphorus, sulfur, and nitrogen, and derivatives thereof.

### [Component (A)]

The component (A) used in the present invention is a base polymer and is a main component that exerts the properties of the resin composition. In the case where the component (A) has properties as a binder, the component (A) is also called a base binder. The component (A) is a polymer having two or more alkenyl groups, and may be a polymer in which two or more alkenyl groups are attached or bound to terminals or a molecular chain of a polymer molecule of the main chain.

The main chain of the polymer of the component (A) is not particularly limited, and various types of main chains can be used. The main chain of the polymer is preferably a vinyl copolymer or a polyorganosiloxane from the viewpoint of versatility. In such cases, the component (A) may be (A-1) a vinyl copolymer having two or more alkenyl groups and (A-2) a polyorganosiloxane having two or more alkenyl groups. It is appropriate that the number average molecular weight of the polymer included in the main chain is within a range of, for example, 500 to 1,000,000, and preferably 1,000 to 100,000. Note that in the Specification, the number average molecular weight is calculated in accordance with a standard polystyrene conversion method using size-exclusion chromatography (SEC) unless otherwise specified. The viscosity of the component (A-1) at 25°C is, for example, preferably 0.03 Pa·s to 1,500 Pa·s, more preferably 0.05 Pa·s to 1,000 Pa·s, and particularly preferably 0.3 Pa·s to 800 Pa·s. The method for testing a viscosity in the Specification is in compliance with JIS Z 8803 unless otherwise specified. It is appropriate that the content of alkenyl groups of the component (A) may be, for example, within a range of 0.01 mmol/g to 5 mmol/g, and preferably 0.05 mmol/g to 1 mmol/g.

The alkenyl groups included in the component (A) are each independently a monovalent group which has at least one double bond and is represented by a general formula (I): R²R³C=C(R¹)-, wherein R¹, R², and R³ are each independently hydrogen or an organic group having 1 to 20 carbon atoms. The organic group having 1 to 20 carbon atoms is not particularly limited, but preferably an alkyl group having 1 to 20 carbon atoms, an aryl group having 6 to 20 carbon atoms, and an aralkyl group having 7 to 20 carbon atoms, and exemplified specifically by groups as follows: -(CH₂)ₙ-CH₃, - CH(CH3)-(CH2)n-CH3, -CH(CH2CH3)-(CH2)n-CH3, -CH(CH2CH3)2, -C(CH3)2-(CH2)n-CH3, -C(CH3)(CH2CH3)-(CH2)n-CH3, -C₆H₅, -C6H4(CH3), -C6H3(CH3)2, -(CH₂)ₙ-C₆H₅, - (CH₂)ₙ-C₆H₄(CH₃), and -(CH₂)ₙ-C₆H₃(CH₃)₂ (n is an integer of 0 or more, 1 or more, 3 or more, or 5 or more, and the total number of carbon atoms of each group is 20 or less, 18 or less, 15 or less, or 10 or less). Among these groups, R¹ is more preferably hydrogen or a methyl group, and R² and R³ are each more preferably hydrogen.

Although the number of alkenyl groups included in the component (A) is 2 or more, but it is preferable that one alkenyl group exists in each of both terminals of the polymer molecule.

A vinyl monomer which serves as the structural unit of the copolymer included in the main chain of the component (A-1) is not particularly limited, and various monomers can be used. Examples of such monomers include (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethylmethyl (meth)acrylate, 2-perfluorohexylethy(meth)acrylate, 2-perfluorodecylethyl (meth)acrylate, and 2-perfluorohexadecylethyl (meth)acrylate; styrene monomers such as styrene, vinyltoluene, α-methylstyrene, chlorostyrene, styrenesulfonic acid and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers such as maleimide, methylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, allyl alcohols, and the like. One of these may be used alone or two or more of these may be copolymerized. Among these, styrene monomers and (meth)acrylic monomers are preferable from the viewpoint of the physical properties of the product, and the like. Acrylic ester monomers and methacrylic ester monomers are more preferable, acrylic ester monomers are particularly preferable, and butyl acrylate is most preferable. In the present invention, the above monomer may be copolymerized with, or further block-copolymerized with another monomer. In such case, it is preferable that the above monomer be contained in an amount of, for example, 40% or more, preferably 50% or more, more preferably 60% or more, and further preferably 70% or more, in mass ratio. Note that in the above forms of descriptions, for example, the (meth)acrylic acid represents an acrylic acid and/or a methacrylic acid.

The number average molecular weight of the vinyl polymer (the polymer included in the main chain of the component (A-1)) of the present invention is within a range of 500 or more and less than 1,000,000, and further preferably 1,000 or more and less than 100,000. When the molecular weight is 500 or more, since the amount of hydrosilyl bond present in the cured product is appropriate, the original properties of the vinyl polymer are likely to be expressed. On the other hand, when the molecular weight is less than 1,000,000, no difficulty in handling, such as difficulty to conduct dispensing application, occurs.

The vinyl polymer can be obtained through various types of polymerization. The method for obtaining the vinyl polymer is not particularly limited, but is preferably the radical polymerization methods from the viewpoint of the versatility of monomers and the easiness of control. Among the radical polymerization, the controlled radical polymerization is preferable, the living radical polymerization is more preferable, and the atom transfer radical polymerization is particularly preferable.

The alkenyl groups included in the component (A-1) of the present invention each are preferably one which hydrosilyl-reacts with a cross-linking agent which will be described later, and preferably one represented by a general formula (II): H₂C=C(R⁴)-.

In the above formula (II), R⁴ is hydrogen or an organic group having 1 to 20 carbon atoms. The organic group having 1 to 20 carbon atoms is not particularly limited, but is preferably an alkyl group having 1 to 20 carbon atoms, an aryl group having 6 to 20 carbon atoms, and an aralkyl group having 7 to 20 carbon atoms, and exemplified specifically by groups as follows: -(CH₂)ₙ-CH₃, -CH(CH₃)-(CH₂)ₙ-CH₃, -CH(CH₂CH₃)-(CH2)n-CH3, -CH(CH2CH3)2, -C(CH3)2-(CH2)n-CH3, -C(CH3)(CH2CH3)-(CH2)n-CH3, - C₆H₅, -C6H4(CH3), -C6H3(CH3)2, -(CH₂)ₙ-C₆H₅, -(CH2)n-C6H4(CH3), -(CH2)n-C₆H₃(CH₃)₂ (n is an integer of 0 or more, 1 or more, 3 or more, or 5 or more, and the total number of carbon atoms of each group is 20 or less, 18 or less, 15 or less, or 10 or less). Among these groups, R⁴ is more preferably hydrogen or a methyl group.

The viscosity of the component (A-1) at 25°C is preferably 0.03 Pa·s or more and less than 1500 Pa·s, more preferably 0.05 Pa·s or more and less than 1,000 Pa·s, and particularly preferably 0.3 Pa s or more and less than 800 Pa·s.

The content of the alkenyl groups of the component (A-1) is within a range of preferably 0.01 mmol/g or more and 5 mmol/g or less, and more preferably 0.05 mmol/g or more and 1 mmol/g or less. When the content is within the above range, it is possible to obtain a resin composition excellent in reactivity and flexibility.

A particularly preferable component (A-1) is a (meth)acrylic copolymer having a vinyl group (H₂C=CH-) at each of both terminals, and commercial products of such component (A-1) include XMAP SA 100A and XMAP OR 100A manufactured by Kaneka Corporation.

The polyorganosiloxane having alkenyl groups of the component (A-2) is not particularly limited, and various types can be used. The molecular structure of the polyorganosiloxane having alkenyl groups is substantially linear, but may have a branched structure in part. The polyorganosiloxane include, for example, a polydimethyl siloxane in which both terminals of the molecular chain are blocked with a vinyl group; a dimethyl siloxane·diphenyl siloxane copolymer in which a terminal of the molecular chain is blocked with a vinyl group; a dimethyl siloxane methylvinyl siloxane·diphenyl siloxane copolymer in which both terminals of the molecular chain are blocked with a vinyl group; a polydimethyl siloxane in which one terminal of the molecular chain is blocked with a vinyl group and the other terminal of the molecular chain is blocked with a trimethoxy group; a polydimethyl siloxane in which one terminal of the molecular chain is blocked with a vinyl group and the other terminal of the molecular chain is blocked with a trimethylsiloxy group; and a dimethyl siloxane methylvinyl siloxane diphenyl siloxane copolymer in which both terminals of the molecular chain are blocked with a trimethylsiloxy group. Among these, a polydimethyl siloxane in which both terminals of the molecular chain are blocked with a vinyl group is preferable because this polydimethyl siloxane has versatility and is excellent in curability. One of these may be used alone or two or more of these may be used in combination. However, the component (A-2) is not the polyorganosiloxane having a hydroxyl group bound to a silicon atom (component (B)).

The alkenyl groups included in the component (A-2) of the present invention each are preferably one which hydrosilyl-reacts with a cross-linking agent, which will be described later, may an alkenyl groups shown as examples in the above (A) and (A-1), and preferably a vinyl group (H₂C=CH-) that binds to Si of a polyorganosiloxane which is preferably the main chain.

The viscosity of the component (A-2) at 25°C is preferably 0.03 Pa·s or more and less than 1500 Pa·s, more preferably 0.05 Pa·s or more and less than 1,000 Pa·s, and particularly preferably 0.3 Pa s or more and less than 800 Pa·s.

The number average molecular weight of the polyorganosiloxane in the component (A-2) of the present invention is within a range of 500 or more and less than 1,000,000, and further preferably 1,000 or more and less than 100,000. When the molecular weight is 500 or more, since the amount of hydrosilyl bond present in the cured product is appropriate, the original properties of the vinyl polymer are likely to be expressed. On the other hand, when the molecular weight is less than 1,000,000, no difficulty in handling, such as difficulty to conduct dispensing application, occurs.

The content of the alkenyl groups of the component (A-2) is within a range of preferably 0.01 mmol/g or more and 5 mmol/g or less, and more preferably 0.05 mmol/g or more and 1 mmol/g or less. When the content is within the above range, it is possible to obtain a resin composition excellent in reactivity and flexibility.

In the component (A), as the method for introducing alkenyl groups into the polymer of the main chain, any publicly-known method can be used as appropriate. For example, the method for introducing alkenyl groups into a vinyl polymer includes the following methods:
(1) A method that reacts, as a second monomer, a compound that has an alkenyl group having a low polymerizability and an alkenyl group having a relatively high polymerizability together in one molecule thereof when synthesizing a vinyl polymer through radical polymerization, preferably living radical polymerization.
(2) A method that reacts a compound that has at least two alkenyl groups having a low polymerizability such as 1,5-hexadiene, 1,7-octadiene, or 1,9-decadiene, for example, at the final stage of polymerization reaction or after reaction of a predetermined monomer when synthesizing a vinyl polymer through living radical polymerization.
(3) A method that reacts a vinyl polymer having at least one carbon-halogen bond with high reactivity with any of various organometallic compounds each having an alkenyl group like an organic tin such as allyl tributyltin or allyl trioctyltin, for example, to substitute halogen.
(4) A method that reacts a vinyl polymer having at least one carbon-halogen bond with high reactivity with a stabilized carbanion having an alkenyl group to substitute halogen.
(5) A method that reacts a vinyl polymer having at least one carbon-halogen bond with high reactivity with a metal only such as zinc or an organometallic compound, for example, to prepare an enolate anion, and then reacting the enolate anion with an electrophilic compound having an alkenyl group such as an alkenyl group-containing compound having a leaving group such as halogen or an acetyl group, a carbonyl compound having an alkenyl group, an isocyanate compound having an alkenyl group, or an acid halide having an alkenyl group.
(6) A method that reacts a vinyl polymer having at least one carbon-halogen bond with high reactivity with an oxyanion or a carboxylate anion having an alkenyl group to substitute halogen.
(7) A method that reacts a hydroxyl group of a vinyl polymer having at least one hydroxyl group with an alkenyl group-containing halide, an alkenyl group-containing isocyanate compound, an alkenyl group-containing carboxylic acid, or an alkenyl group-containing acid halide, or a method that reacts the above hydroxyl group with diisocyanate, and further reacting a compound containing a hydroxyl group and an alkenyl group.

Among these, the methods (2), (6), and (7) are preferable from the view point that control is easier.

### [Component (B)]

The component (B) used in the present invention is a polyorganosiloxane having a hydroxyl group bound to a silicon atom. However, the component (B) is a component different from the component (A). Among these, a polyorganosiloxane which is represented by the following general formula (III) and which has hydroxyl groups as both terminal groups, that is, which is blocked with hydroxyl groups is preferable as the component (B).

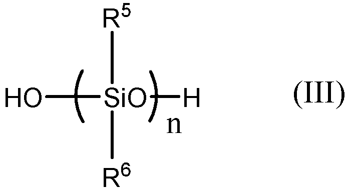

In the formula (III), R⁵ and R⁶ represent substituted or unsubstituted monovalent hydrocarbon groups which may be the same or different, and each may be preferably a hydrocarbon group having 12 carbon atoms or less, more preferably an alkyl group having 1 to 10, 1 to 8, or 2 to 6 carbon atoms, and more preferably an alkyl group such as a methyl, ethyl, or propyl group; a cycloalkyl group such as a cyclohexyl group; an alkenyl groups such as a vinyl or allyl group; or an aryl group such as a phenyl or tolyl group. R⁵ and R⁶ may each be a substituted hydrocarbon group in which a hydrogen atom of the group is partially substituted with a halogen atom or the like.

In the formula (III), n is an integer of, for example 5 or more, preferably 10 to 100, and more preferably 15 to 50.

The viscosity of the component (B) at 25°C is preferably 10 mm²/s or more and less than 1,000 mm²/s, further preferably 20 mm²/s or more and less than 500 mm²/s, and most preferably 30 mm²/s to 100 mm²/s. When the viscosity is 10 mm²/s or more and less than 1,000 mm²/s, it is possible to suppress a change in viscosity with time as the resin composition.

It is appropriate that the number average molecular weight of the component (B) is within a range of, for example, 500 to 1,000,000, and preferably 1,000 to 100,000.

Commercial products of the component (B) include X-21-5841 and KF-9701 manufactured by Shin-Etsu Chemical Co., Ltd., BY16-873 manufactured by Dow Corning Toray Co., Ltd., XC96-723 manufactured by Momentive, and the like.

The above base polymer of the component (A) and/or the component (B) can contain either or both of the component (A) and the component (B).

### [Component (C)]

The component (C) used in the present invention is a silica powder surface-treated with an alkyl silane. The component (C) of the present invention can express significant thixotropy when used together with the component (D), which will be described later.

The alkyl silane includes alkyl silane compounds represented by a general formula (IV): Si(R⁷)₄. In the general formula (IV), R⁷ may be the same or different, and are preferably alkyl groups having 3 to 15 carbon atoms, further preferably alkyl groups having 5 to 10 carbon atoms, and most preferably alkyl groups having 8 to 10 carbon atoms, from the viewpoint that they are excellent in dispersibility to the component (A) and the component (B) and have an effect to express high thixotropy with the component (D). Specific examples of R⁷ in the general formula (IV) include a propyl group, an isopropyl group, a butyl group, an isobutyl group, a pentyl group, an isopentyl group, a hexyl group, an isohexyl group, a heptyl group, an isoheptyl group, an octyl group, an isooctyl group, a nonyl group, an isononyl group, a decyl group, and an isodecyl group, but an octyl group is preferable.

The silica powder of the component (C) is preferably a fumed silica powder. The fumed silica powder is made of silicon dioxide obtained by the flame hydrolysis method, in which particles in the form of perfect sphere are formed, and multiple particles are aggregated and fused in the form of beads to form bulky agglomerates.

The average particle size of primary particles of the silica powder surface-treated with the alkyl silane of the component (C) is preferably 1 nm or more and less than 300 nm, further preferably 3 nm or more and less than 100 nm, and most preferably 5 nm or more and less than 50 nm. Note that the average particle size of the primary particles mentioned in the present invention can be measured and calculated by a general method such as the centrifugal sedimentation light transmission method, the laser diffraction method, or a method that measures particle sizes with transmission electron microscope; however, the average particle size of the primary particles mentioned in the Specification is a numerical value obtained by measuring the major radius and the minor radius of a two-dimensional projection image of each primary particle using a transmission electron microscope and averaging the measured values in compliance with JIS H 7804:2005 unless otherwise specified.

The BET specific surface area of the silica powder surface-treated with the alkyl silane of the component (C) is preferably less than 300 m²/g, and further preferably less than 250 m²/g. Note that the lower limit value of the BET specific surface area is, for example, 100 m²/g or more and preferably 150 m²/g or more from the viewpoint of the packing factor of the component (A) and the component (B).

The apparent specific gravity of the silica powder surface-treated of the component (C) is preferably 1 g/l or more and less than 100 g/l, and more preferably 10 g/l or more and less than 80 g/l from the viewpoint of preventing sedimentation of the component (C) with time in the resin composition. Note that the apparent specific gravity mentioned in the Specification is a value measured by measuring the apparent density after tapping is sufficiently conducted, in compliance with DIN ISO 787-11.

The content of the component (C) is preferably 0.01 to 100 parts by mass, further preferably 0.1 to 50 parts by mass, and most preferably 0.5 to 30 parts by mass, relative to 100 parts by mass of the base polymer of the component (A) and/or the component (B). When the content of the component (C) is 0.01 to 100 parts by mass, it is possible to control the viscosity property while maintaining the properties of the base polymer.

Commercial products of the component (C) include AEROSIL R805 (manufactured by Evonik Industries AG), CAB-o-SIL TS-530 (manufactured by CABOT Corporation), and the like.

### [Component (D)]

The component (D) which can be used in the present invention is a compound comprising one or more elements selected from the group consisting of boron, phosphorus, sulfur, and nitrogen. The component (D) is a main component which suppresses an increase in viscosity due to the component (C) and increases a thixotropy imparting effect. The component (D) may be an acid comprising the above element, as well as a derivative of the acid such as an ester of the acid (acid ester compound) or a salt of the acid. The component (D) includes, for example, boric acid, borate esters, phosphoric acid, phosphate esters, sulfuric acid, sulfate esters, nitric acid, nitrate esters, and the like. Among these, the component (D) is preferably boric acid, a borate ester, phosphoric acid, or a phosphate ester from the viewpoint of the curability and the preservation stability, preferably a borate ester or a phosphate ester from the viewpoint of the thixotropy imparting effect, and particularly preferably a borate ester.

As the borate ester, any desired borate ester can be used, but is more preferably a compound which is represented by the following general formula (V) and which has one borate ester in a molecule thereof in the present invention.

B-(OR⁸)₃ (V)

Here, in the formula (V), R⁸ are each hydrogen, or a functional group selected from an alkyl group, an aryl group, a carbonyl group, and an acetyl group each having 1 to 6 carbon atoms which may have a substituent, and all of three R⁸ may be the same or different. The compound includes trialkyl borate compounds such as trimethyl borate, triethyl borate, and tributyl borate, and tributyl borate is preferable from the viewpoint of the preservation stability of the resin composition.

The phosphate ester includes ethyl acid phosphate, butyl acid phosphate, butoxy ethyl acid phosphate, oleyl acid phosphate, 2-ethylhexyl acid phosphate, 2-hydroxyethylmethacrylate acid phosphate, dibutyl phosphate, and the like, but is not limited to these.

The content of the component (D) is preferably 0.05 to 20 parts by mass, further preferably 0.1 to 12 parts by mass, and most preferably 0.2 to 7 parts by mass, relative to 100 parts by mass of the base polymer of the component (A) and/or the component (B). When the content of the component (D) is 0.05 to 20 parts by mass, it is possible to maintain the thixotropy without affecting the properties as the resin composition.

In order to improve only the thixotropy while suppressing an increase in viscosity, the mass ratio of the component (C) : the component (D) in the resin composition is for example such that component (C):component (D)=15:1 to 1:15, preferably 9:1 to 1:9, more preferably 8:2 to 2:8, and most preferably 7:3 to 3:7.

### [Optional Component]

The resin composition of the present invention may contain an optional component different from the above components (A) to (D), such as a filler, an antioxidant, a light stabilizer, a preservation stabilizer, an antifoam, a coupling agent, a leveling agent, a dispersant, a pH adjuster, a solvent, an adhesion promoter, a plasticizer, a pigment, a flame retardant, and a surfactant, besides the above components (A) to (D), as long as the object of the present invention is not impaired. Adding these makes it possible to obtain a resin composition excellent in applicability, film formation, preservation stability, and the like.

A filler in such an amount that does not impair the preservation stability may be added to the present invention for the purpose of improving elastic modulus, resin strength, fluidity, and the like of the cured product. Specifically, such filler includes organic powders, inorganic powders, metallic powders, and the like. Fillers of inorganic powders include glass, alumina, mica, ceramic, a silicone rubber powder, calcium carbonate, aluminum nitride, a carbon powder, kaolin clay, dried clay mineral, dried diatomite, and the like. The amount of an inorganic powder to be blended is preferably about 0.1 to 100 parts by mass relative to 100 parts by mass of the base polymer of the component (A) and/or the component (B). When the amount is 100 parts by mass or less, it is possible to obtain sufficient fluidity as the resin composition and to thus obtain favorable workability.

Fillers of organic powders include, for example, polyethylene, polypropylene, nylon, cross-linked aklyl, cross-linked polyethylene, polyester, polyvinyl alcohol, polyvinyl butyral, and polycarbonate. The amount of the organic powder to be blended is preferably about 0.1 to 100 parts by mass relative to 100 parts by mass of the base polymer of the component (A) and/or the component (B). When the amount is more than 0.1 parts by mass, the effect does not decrease, while when the amount is 100 parts by mass or less, it is possible to obtain sufficient fluidity as the resin composition and to thus obtain favorable workability.

Fillers of metallic powders include, for example, gold, platinum, silver, copper, indium, palladium, nickel, alumina, tin, iron, aluminum, stainless steel, and the like. The amount of the metallic powder to be blended is preferably about 0.1 to 100 parts by mass, and more preferably 1 to 50 parts by mass, relative to 100 parts by mass of the base polymer of the component (A) and/or the component (B).

The antioxidant includes, for example, quinone compounds such as β-naphthoquinone, 2-methoxy-1,4-naphthoquinone, methylhydroquinone, hydroquinone, hydroquinone monomethyl ether, mono-tert-butylhydroquinone, 2,5-di-tert-butylhydroquinone, p-benzoquinone, 2,5-diphenyl-p-benzoquinone, and 2,5-di-tert-butyl-p-benzoquinone; phenols such as phenothiazine, 2,2-methylene-bis(4-methyl-6-tert-butylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-methylphenylacrylate, 2-[1-(2-hydroxy-3,5-di-tert-pentylphenyl)ethyl]-4,6-di-tert-pentylphenylacrylate, 4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5,5]undecane, pentaerythritoltetrakis[3-(3,5-di-tert-butyl-4-hydroxyphenyl)propipnate], thiodiethylenebis[3-(3,5-di-tert-butyl-4-hydroxyphenyl)propipnate], octadecyl-3-(3,5-di-tert-butyl-4-hydroxyphenyl)propipnate, N,N'-hexane-1,6-diyl-bis[3-(3,5-di-tert-butyl-4-hydroxyphenyl)propionamide], benzenepropanoic acid,3,5-bis(1,1-dimethylethyl)-4-hydroxy, C7-C9 branched alkyl ester, 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-tolyl)tri-p-cresol, calciumdiethylbis[[3,5-bis(1,1-dimethylethyl)-4-hydroxyphenyl]methyl]phosphonate, 4,6-bis(octylthiomethyl)-o-cresol, ethylenebis(oxyethylene)bis[3-(5-tert-butyl-4-hydroxy-m-tolyl)propipnate], hexamethylenebis[3-(3,5-di-tert-butyl-4-hydroxyphenyl)propipnate, 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, a reaction product of N-phenyl benzenamine and 2,4,6-trimethylpentene, 2,6-di-tert-butyl-4-(4,6-bis(octylthio)-1,3,5-triazine-2-ylamino)phenol, picric acid, and citric acid; phosphorus compounds such as tris(2,4-di-tert-butylphenyl)phosphite, tris[2-[[2,4,8,10-tetra-tert-butyldibenzo[d,f][1,3,2]dioxaphosphephin-6-yl]oxy]ethyl]amine, bis(2,4-di-tert-butylphenyl)pentaerythritol diphosphite, bis[2,4-bis(1,1-dimethylethyl)-6-methylphenyl] ethyl ester phosphorous acid, tetrakis(2,4-di-tert-butylphenyl)[1,1-bisphenyl]-4,4'-diilybisphosphonite, and 6-[3-(3-tert-butyl-4-hydroxy-5-methylphenyl)propoxy]-2,4,8,10-tetra-tert-butyldibenz[d,f][1,3,2]dioxaphosphephin; amine compounds such as phenothiazine; lactone compounds; vitamin E compounds, and the like. Among these, phenol compounds are preferable.

The light stabilizer includes, for example, hindered amines such as bis(2,2,6,6-tetramethyl-4-piperidyl)sebacate, bis(1,2,2,6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-dimethylethyl)-4-hydroxyphenyl]methyl]butylmalonate, decanedioic acid bis(2,2,6,6-tetramethyl-1(octyloxy)-4-piperidinyl) ester, a reaction product of 1,1-dimethylethyl hydroperoxide and octane, N,N',N",N‴-tetrakis-(4,6-bis-(butyl-(N-methyl-2,2,6,6-tetramethylpiperidine-4-yl)amino)-triazin-2-yl)-4,7-diazadecane-1,10-diamine, a polycondensate of dibutylamine·1,3,5-triazine·N,N'-bis(2,2,6,6-tetramethyl-4-piperidyl-1,6-hexamethylenediamine and N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], a polymer of dimethyl succinate and 4-hydroxy-2,2,6,6-tetramethyl-1-piperidineethanol, 2,2,4,4-tetramethyl-20-(β-lauryloxycarbonyl)ethyl-7-oxa-3 ,20-diazadispiro[5,1,11,2]heneicosane-21-one, β-alanine, N,-(2,2,6,6-tetramethyl-4-piperidinyl)-dodecyl ester/tetradecyl ester, N-acetyl-3-dodecyl-1-(2,2,6,6-tetramethyl-4-piperidinyl) pyrrolidine-2,5-dione, 2,2,4,4-tetramethyl-7-oxa-3,20-diazadispiro[5,1,11,2]heneicosane-21-one, 2,2,4,4-tetramethyl-21-oxa-3,20-diazadicyclo-[5,1,11,2]-heneicosane-20-propanoic acid dodecyl ester/tetradecyl ester, propanedioic acid, [(4-methoxyphenyl)-methylene]-bis(1,2,2,6,6-pentamethyl-4-piperidinyl) ester, a higher fatty acid ester of 2,2,6,6-tetramethyl-4-piperidinol, 1,3-benzenedicarboxamide, and N,N'-bis(2,2,6,6-tetramethyl-4-piperidinyl); benzophenone compounds such as octabenzone; benzotriazole compounds such as 2-(2H-benzotriazol-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-3,5-di-tert-pentylphenyl)benzotriazole, a reaction product of methyl3-(3-(2H-benzotriazol-2-yl)-5-tert-butyl-4-hydroxyphenyl)propipnate and polyethylene glycol, and 2-(2H-benzotriazol-2-yl)-6-dodecyl-4-methylphenol; benzoate compounds such as 2,4-di-tert-butylphenyl-3,5-di-tert-butyl-4-hydroxybenzoate; triazine compounds such as 2-(4,6-diphenyl-1,3,5-triazine-2-yl)-5-[(hexyl)oxy]phenol, and the like. Hindered amine compounds are particularly preferable.

It is appropriate that the amount of the optional component contained in the resin composition of the present invention is, for example, 0.05 to 100 parts by mass, preferably 0.1 to 50 parts by mass, and more preferably 0.2 to 20 parts by mass, relative to 100 parts by mass of the base polymer of the component (A) and/or the component (B), for example.

### <Curable Resin Composition>

The above resin composition of the present invention may be made into a curable resin composition by further adding a curing component such as a cross-linking agent, a catalyst, and a coupling agent as appropriate. A cured product of the curable resin composition can be obtained by curing the curable resin composition under desired conditions. The curable resin composition of the present invention may be used as a two-liquid curable resin composition kit for which several components are separately prepared and stored, and are then mixed in use, besides a one-liquid curable resin composition which is obtained by mixing all components.

In the case where a resin composition that comprises the component (A) as the base polymer is used, the resin composition may comprise a compound having one or more hydrosilyl groups in one molecule thereof as a cross-linking agent. The hydrosilyl group refers to a group having a SiH bond. The cross-linking agent is not particularly limited as long as the cross-linking agent can cure through hydrosilylation reaction with the component (A), but includes polysiloxane, and the like, and is preferably organo hydrogen polysiloxane, including silicone that is composed of a linear, branched, cyclic, or reticular molecule and contains a hydrosilyl group in a molecule thereof. In addition, a compound having two or more hydrosilyl groups in one molecule thereof is preferable from the viewpoint of the resin strength and curability.

The viscosity of the cross-linking agent at 25°C is preferably 1 mPa·s or more and less than 10 Pa·s, further preferably 5 mPa·s or more and less than 5 Pa·s, and particularly preferably 7 mPa·s or more and less than 1 Pa·s, from the viewpoint of the compatibility with the component (A). In addition, the SiH value of the cross-linking agent is preferably 10 or more and less than 1,000 g/mol, more preferably 50 or more and less than 700 g/mol, and most preferably 100 or more and less than 500 g/mol, from the viewpoint of the curability of the resin composition. Here, the SiH value means the concentration (g/mol) of a SiH group in one molecule.

A substituent other than the hydrogen atom, which is bound to the silicon atom of the cross-linking agent is preferably an alkyl group having 1 to 20 carbon atoms or a phenyl group, but may be another group.

Commercial products of the cross-linking agent are not particularly limited, but include CR-300, CR-500 (manufactured by Kaneka Corporation), HMS-013, HMS-151, HMS-301 (manufactured by AZMAX Corp.), SH1107 Fluid (manufactured by Dow Corning Toray Co., Ltd.), and the like.

The amount of the cross-linking agent added is usually preferably an amount giving 0.5 equivalents or more and 1.5 equivalents or less, and further preferably an amount giving 0.8 equivalents or more and 1.2 equivalents or less, relative to the hydrosilyl group in the cross-linking agent and one alkenyl group contained in the component (A). In the case of more than 0.5 equivalents, the cross-linking density does not become too small, while in the case of less than 1.5 equivalents, the problem of foaming due to dehydrogenating reaction does not occur, or the heat resistance is not affected. In addition, the mixing ratio between the component (A) and the component (C) is such that the molar ratio of the hydrosilyl group of the component (C) to 1 mol of the alkenyl group of the component (A) is within a range of preferably 0.2 or more and 5 or less, and further preferably 0.4 or more and 2.5 or less, from the viewpoint of the curability. When the molar ratio is less than 5, sufficient curability can be imparted, while when the molar ratio is 0.2 or more, a uniform cured product having strength can be obtained with which no crack or void occurs in the cured product after the cure.

In the case of using the component (A), it is preferable to use an addition reaction-type curing catalyst as the catalyst. It is preferable that the addition reaction-type curing catalyst contain a hydrosilylation catalyst. The hydrosilylation catalyst is not particularly limited as long as the hydrosilylation catalyst can catalyze hydrosilylation reaction, and any desired catalyst can be used. Such a catalyst includes, for example, radical initiators such as organic peroxides and azo compounds, and transition metal catalysts. Among these, the transition metal catalysts are preferable because the transition metal catalysts have high reactivity.

The transition metal catalysts specifically include those obtained by supporting platinum solids on supports of platinum, alumina, silica, carbon black, and the like; chloroplatinic acid; complexes of chloroplatinic acid with alcohols, aldehydes, ketones, and the like; platinum-olefin complexes; platinum-vinylsiloxane complexes such as Ptₙ(ViMe₂SiOSiMe₂Vi)ₙ and Pt[(MeViSiO)₄]ₘ; platinum-phosphine complexes such as Pt(PPh₃)₄ and Pt(PBu₃)₄; platinum-phosphite complexes such as Pt[P(OPh)₃]₄ and Pt[P(OBu)₃]₄; and Pt(acac)₂. Note that in each above formula, Me represents a methyl group, Bu represents a butyl group, Vi represents a vinyl group, Ph represents a phenyl group, acac represents an acetylacetonate, and n and m each represent an integer. In addition, the transition metal catalysts also include platinum-hydrocarbon complexes described in the Specification of United States Patent No. 3159601 and the Specification of United States Patent No. 3159662 by Ashby et al.; and platinum alcoholate catalysts described in the Specification of United States Patent No. 3220972 by Lamoreaux et al. From the viewpoint of the curability preferable catalysts include those obtained by supporting a solid platinum on supports of chloroplatinic acid, platinum, alumina, silica, carbon black, and the like; complexes of chloroplatinic acid with alcohols, aldehydes, ketones, and the like; platinum-olefin complexes such as Pt(CH₂=CH₂)₂Cl₂; platinum-divinyltetramethyldisiloxane complexes; platinum-vinylsiloxane complexes such as Ptₙ(ViMe₂SiOSiMe₂Vi)ₓ and Pt[(MeViSiO)₄]_{y}; and platinum-phosphite complexes such as Pt(PPh₃)₄ and Pt(PBu₃)₄. Among these, chloroplatinic acid, platinum-olefin complexes, platinum-vinylsiloxane complexes, and the like are preferable from the viewpoint that they are excellent in activity.

Moreover, examples of catalysts other than platinum compounds include RhCl(PPh₃)₃, RhCl₃, Rh/Al₂O₃, RuCl₃, IrCl₃, FeCl₃, AiCl₃, PdCl₂·xH₂O, NiCl₂, TiCl₄, and the like. One of these catalysts may be used alone or two or more of these may be used in combination.

The amount of the catalyst used is not particularly limited, but in the case of using the component (A), is preferably within a range of 1×10⁻⁸ mol or more and less than 1×10⁻¹ mol, and further preferably within a range of 1×10⁻⁶ mol or more and less than 1×10⁻² mol, relative to 1 mol of the alkenyl group of the component (A). In addition, in the case of using a hydrosilylation catalyst as the catalyst, since the hydrosilylation catalyst is generally expensive and corrosive, and sometimes generates a large amount of hydrogen gas, causing the cured product to foam, the amount is preferably less than 1×10⁻¹ mol. The absolute amount of the catalyst present in the curable resin composition is, for example, 0.01 to 1 parts by mass, preferably 0.020 to 0.5 parts by mass, and more preferably 0.03 to 0.1 parts by mass, relative to 100 parts by mass of the component (A). The form of the catalyst may be any of a solid or a liquid, but is is appropriate to use the catalyst, for example, in the form of an alcohol solution, preferably in the form of a solution of methanol, ethanol, propanol, or the like, and more preferably in the form of an isopropanol solution.

In the case where the resin composition comprising the component (B) as the base polymer is used to obtain a curable resin composition, it is preferable that the resin composition further comprise a compound having a multifunctional hydrolyzable silyl group. Moreover, in order to cause condensation reaction of this compound and the component (B), it is appropriate to use an organic tin complex, an amine compound, or an organic complex composed of a fourth group element of titanium or zirconium as a condensation reaction catalyst. There are condensation reaction catalysts of de-alcohol type, de-oxime type, de-acetic acid type, de-ketone type, and the like depending on the type of the hydrolyzable group.

The above compound having a multifunctional hydrolyzable silyl group is not limited as long as the compound has 2 to 3 hydrolyzable silyl groups in one molecule thereof, and is preferably a silane-based coupling agent. The type of hydrolyzable silyl group include acyloxysilyl groups such as an acetoxysilyl group, an octanoyloxysilyl group, and a benzoyloxysilyl group; ketoximesilyl groups such as a dimethylketoximesilyl group, a methylethylketoximesilyl group, and a diethylketoximesilyl group; alkoxysilyl groups such as a methoxysilyl group, an ethoxysilyl group, and a propoxy group; alkenyloxysilyl groups such as an isopropenyloxysilyl group and a 1-ethyl-2-methyl vinyloxysilyl group; aminosilyl groups such as a dimethyl aminosilyl group, a diethyl aminosilyl group, a butyl aminosilyl group, and a cyclohexyl aminosilyl group; aminooxysilyl groups such as a dimethyl aminooxysilyl group and a diethyl aminooxysilyl group; and amide silyl groups such as a N-methyl acetoamide silyl group, and a N-ethyl acetoamide silyl group, N-methyl benzamide silyl group, and the like, but is not limited to these. The methoxysilyl group, the ethoxysilyl group, and the propoxysilyl group are preferable with friendliness to human bodies and environments take into consideration.

As specific examples of the above condensation reaction catalysts, the organic tin complexes include dibutyltin bistriethoxysilicate, dibutyltin dioctoate, dibutyltin acetate, dibutyltin dilaurate, butyltin-2-ethylhexanoate, stannous caprylate, tin naphthenate, tin oleate, tin butyrate, and the like. In addition, the titanium-based catalysts include tetraisopropyl titanate, tetra-n-butyl titanate, butyl titanate dimer, tetraoctyl titanate, titanium acetylacetonate, titanium octyleneglycolate, titanium tetraacetylacetonate, titanium ethyl acetoacetate, polyhydroxytitanium stearate, titanium lactate, titanium triethanolaminate, and the like. The zirconium-based catalysts include zirconium tetra-n-propoxide, zirconium tetra-n-butoxide, zirconium tetra acetylacetonate, zirconium monobutoxyacetyl acetonate bis(ethyl acetoacetate), zirconium dibutoxybis(ethyl acetoacetate), zirconium tetra acetylacetonate, zirconium tributoxy stearate, and the like. However, the above condensation reaction catalysts are not particularly limited to these. In addition, compounds having amines in the structures of cross-linking agents can also be used as catalysts. Specific examples of the amine compounds include 3-(2-aminoethyl)aminopropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropylmethyldiethoxysilane, N-2-(aminoethyl)-3-aminopropyltriethoxysilane, 3-aminopropyltrimethoxysilane, 3-aminopropyltriethoxysilane, and the like.

Regarding the amounts of the compound having a hydrolyzable silyl group and the condensation reaction catalyst to be added, the amount of the compound having a hydrolyzable silyl group added is 0.1 to 25 parts by mass, and preferably 1 to 20 parts by mass, and the amount of the condensation reaction catalyst added is 0.001 to 1 parts by mass, and preferably 0.01 to 0.5 parts by mass, relative to 100 parts by mass of the component (B).

### <Usage>

The resin composition of the present invention is used as part of materials of a curable resin composition for use in a sealant, an adhesive, and the like. The curable resin composition of the present invention may be used as a sealant, an adhesive, a coating agent, and the like. A cured product obtained by curing the curable resin composition of the present invention may be used as a seal layer or a seal portion formed by curing the above sealing material, an adhesive layer or an adhesive portion formed by curing the above adhesive, or a coating layer or a coating portion formed by curing the above coating agent.

### <Applying Method>

As the method for applying the resin composition and the curable resin composition of the present invention to an object to be coated, publicly-known methods for applying sealants, adhesives, and the like are used. For example, methods such as dispensing, spray, inkjet, screen printing, gravure printing, dipping, and spin-coating using automatic applicators can be used. Note that it is appropriate that the resin composition and the curable resin composition of the present invention are liquids at 25°C from the viewpoint of applicability.

### <Curing Method and Cured Product>

The curable resin composition of the present invention may be cured by a publicly-known method using heating or moisture to obtain a cured product. Specifically, the method for producing a cured product includes a method for producing a cured product comprising the steps of:
producing a resin composition by mixing the above components (A) to (D) and the above optional component as necessary;
mixing the resin composition with a cross-linking agent and a curing catalyst; and
producing a cured product by curing the resin composition, under a condition of a curing temperature of 30 to 300°C in a case where the component (A) is used as the base polymer, or under a condition of a curing temperature of 10 to 50°C in the presence of water vapor in a case where the component (B) is used as the base polymer.

In the case where the curable resin composition using the component (A) of the present invention is cured by heating, the curing temperature is not particularly limited, but is preferably 30 to 300°C, more preferably 50 to 200°C, and further preferably 60 to 150°C. The curing time is not particularly limited, but is preferably 20 minutes or more and less than 5 hours, and further preferably 40 minutes or more and 3 hours or less, in the case where the curing temperature is 60 to 150°C.

In the case where the curable resin composition using the component (B) of the present invention is cured by moisture using water vapor, the curing temperature is not particularly limited, but is preferably 10°C to 50°C, and preferably 15°C to 30°C. In addition, the relative humidity is preferably 40%RH or more, and the curing time is preferably 1 hour or more and less than 2 weeks.

### <Method for Producing Resin Composition>

The resin composition of the present invention is produced by mixing each component. The order of mixing each component is not particularly limited, and it is possible to disperse the component (C) in the component (A) and/or the component (B) using a mixer, and thereafter add the component (D), or it is possible to add the component (D) to the component (A) and/or the component (B), followed by agitation using a mixer, and then add and disperse the component (C).

It is possible to further add a curing component such as a cross-linking agent or a catalyst to the resin composition of the present invention to obtain a curable resin composition. Specifically, the curable resin composition is produced in accordance with the following procedures.

In the case of using the component (A):
After the components (A) to (D) (provided that the component (B) is optional) are added, followed by agitation using a mixer, and curing components such as a cross-linking agent and a catalyst are added, followed by agitation.

In the case of using the component (B):
After the components (A) to (D) (provided that the component (A) is optional) are added, curing components such as a cross-linking agent and a catalyst are added, followed by agitation under a reduced pressure.

### Examples

Next, the present invention will be described in further detail giving Examples. However, the present invention is not limited to only these Examples.

### [Examples 1 to 7, Comparative Examples 1 to 7]

The following components were prepared in order to prepare desired resin compositions.

Component (A-1): XMAP OR100A (manufactured by Kaneka Corporation): An acrylic copolymer having one vinyl group at each of both terminals as an alkenyl group, the viscosity (25°C) 700 Pa·s

Component (A-2): XF40-A1987 (manufactured by Shin-Etsu Chemical Co., Ltd.): A polyorganosiloxane having one vinyl group at each of both terminals as an alkenyl group, the viscosity (25°C) 13 Pa·s, the content of an alkenyl group (vinyl group) 0.13 mmol/g

Component (B): KF-9701 (manufactured by Shin-Etsu Chemical Co., Ltd.): A dimethyl silicone oil having silanol at both terminals, the viscosity (25°C) 60 mm²/s

Component (C): AEROSIL, R805 (manufactured by Evonik Industries AG): A fumed silica powder surface-treated with octyl-silane, the average particle size of primary particles 12 nm, the BET specific surface area 150 m²/g, the apparent specific gravity 60 g/l

Component (C'1): AEROSIL R972 (manufactured by NIPPON AEROSIL CO., LTD.): A fumed silica powder surface-treated with dimethylsilyl, the average particle size of primary particles 16 nm, the BET specific surface area 110 m²/g, the apparent specific gravity 50 g/l

Component (C'2): AEROSIL 200 (manufactured by NIPPON AEROSIL CO., LTD.): A untreated fumed silica powder, the average particle size of primary particles 12 nm, the BET specific surface area 200 m²/g, the apparent specific gravity 50 g/l

Component (C'3): AEROXIDE, T805 (manufactured by NIPPON AEROSIL CO., LTD.): A titanium powder surface-treated with octyl-silane, the average particle size of primary particles 21 nm, the BET specific surface area 45 m²/g, the apparent specific gravity 200 g/l
Component (D-1): Tributyl borate (reagent)
Component (D-2): Phosphoric acid (reagent)
Component (D-3): Sulfuric acid (reagent)
Component (D-4): Nitric acid (reagent)
Component (D'-1): Methacrylic acid (manufactured by MITSUBISHI RAYON CO., LTD.)
Component (D'-2): Acetic acid (reagent)
Components other than those shown in Table 1 and Table 2 below were as follows. The amount of any component added is the amount added relative to 100 parts by mass of the base polymer of the component (A) or the component (B).

### In the case of using the component (A)

- CR-500 (cross-linking agent) hydrosilyl group-containing compound (manufactured by Kaneka Corporation), 16 parts by mass (1.0 equivalents relative to Component A), SiH value: 253 g/mol
- Pt-VTS-3.0IPA (transition metal catalyst) an isopropyl alcohol solution of platinum-divinyltetramethyldisiloxane complex (manufactured by Umicore Precious Metals Japan Co., Ltd.), 0.03 parts by mass

### In the case of using the component (B)

- 3-(2-Aminoethyl)aminopropyltrimethoxysilane (condensation reaction catalyst, Z-6020 manufactured by Dow Corning Toray Co., Ltd.), 9 parts by mass
- Dibutyltin bistriethoxysilicate (condensation reaction catalyst, Neostan U-303 manufactured by Nitto Kasei Co., Ltd.), 0.2 parts by mass

The component (A) or the component (B) was weighed in an agitation container, and the component (C) was weighed in the agitation container, followed by agitation for 30 minutes. The component (D) was weighed, followed by agitation for 10 minutes. Besides, a cross-linking agent and a catalyst were weighed and introduced to obtain each curable resin composition. Detailed preparation amounts were in accordance with Table 1 and Table 2, and all numerical values are expressed in parts by mass.

### [Viscosity]

The viscosity (Pa·s) of each curable resin composition was measured using a cone and plate viscometer based on the following measurement conditions. The viscosity (Pa·s) was evaluated based on the following criteria, and results are shown in Table 1.
Shear rate: 1.0 s⁻¹
Measurement time: 3 min
Temperature condition: 25°C
Amount of resin: 0.5 mL

The measurement of the viscosity makes it possible to evaluate whether or not the sample has a low viscosity in a high shear rate state at the time of application of the sample out of the thixotropy of the sample.

### [Evaluation of Sagging Property]

The sagging property refers to a measurement of how much an applied paint or the like moves in a vertical direction after a predetermined period of time elapses from when the paint is applied to an applied surface. The measurement of the sagging property makes it possible to evaluate whether or not the sample has a high viscosity in a low shear rate state after the application of the sample out of the thixotropy of the sample. Specifically, a gauge line was drawn at a position 10 mm from a short side of a test piece (having a thickness of 1.0×a short side of 25×a long side of 100 mm) of SUS304, and a beat of each resin having Φ=2.5 mm was applied onto the gauge line using a dispenser. The test piece was placed vertically, and the distances by which the resin moved from the gauge line with time (10 minutes, 30 minutes, and 60 minutes) were measured. The test was conducted at 25°C.

### <Evaluation Criteria>

^{⊚} (Excellent): The traveled distance after the elapse of 60 minutes was less than 3 mm.
^{○} (Good): The traveled distance after the elapse of 60 minutes was less than 5 mm.
^{△} (Fair): The traveled distance after the elapse of 30 minutes was less than 5 mm.
^{×} (Poor): The traveled distance after the elapse of 10 minutes was 5 mm or more.

Note that during the measurement of the sagging property, easiness of application and easiness of work along therewith were also evaluated for the applicability and the workability.

**Table 1**

| | | | Example 1 | Example 2 | Example 3 | Example 4 | Example 5 | Example 6 | Example 7 | Example 8 |
|---|---|---|---|---|---|---|---|---|---|---|
| (A-1) | XMAP OR100A | | 100 | 100 | 100 | | | 100 | 100 | 100 |
| (A-2) | XF40-A1987 | | | | | 100 | | | | |
| (B) | KF-9701 | | | | | | 100 | | | |
| (C) | R805 | | 7.4 | 7.4 | 7.4 | 7.4 | 7.4 | 7.4 | 7.4 | 7.4 |
| (D) | Tributyl borate | | 3.7 | 1.8 | 12 | 3.7 | 3.7 | | | |
| | Phosphoric acid | | | | | | | 3.7 | | |
| | Sulfuric acid | | | | | | | | 0.6 | |
| | Nitric acid | | | | | | | | | 0.6 |
| Viscosity Pa·s | | | 780 | 982 | 194 | 944 | 59 | 1290 | 1250 | 1025 |
| Sagging property | | 10 min | 0 | 0 | 0 | 0 | 0 | 1 | 1 | 1.5 |
| | | 30 min | 0.2 | 1.2 | 1.5 | 0.5 | 0.2 | 1.5 | 1 | 3.5 |
| | | 60 min | 0.2 | 3 | 3.2 | 0.7 | 0.4 | 3.1 | 3.5 | 5.3 |
| Sagging property (overall evaluation) | | | ⊚ | ○ | ○ | ⊚ | ⊚ | ○ | ○ | △ |

**Table 2**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| (A-1) | XMAP OR100A | | 100 | 100 | 100 | 100 | 100 | 100 | 100 |
| (A-2) | XF40-A1987 | | | | | | | | |
| (B) | KF-9701 | | | | | | | | |
| (C) | R805 | | | | | 7.4 | 7.4 | | 7.4 |
| (C') | R972 | | 7.4 | | | | | | |
| | 200 | | | 7.4 | | | | | |
| | T805 | | | | 7.4 | | | | |
| (D) | Tributyl borate | | 3.7 | 3.7 | 3.7 | | | 3.7 | |
| (D') | Methacrylic acid | | | | | 3.7 | | | |
| | Nitric acid | | | | | | 3.7 | | |
| Viscosity Pa·s | | | 552 | 1 | 221 | 604 | 561 | 179 | 1228 |
| Sagging property | | 10 min | 5 | 12 | 15 | 5.2 | 5 | 17 | 5 |
| | | 30 min | 11 | 26 | 23 | 5.7 | 5.5 | 29 | 7 |
| | | 60 min | 20 | 38 | 30 | 6 | 6 | 41 | 10 |
| Sagging property (overall evaluation) | | | × | × | × | × | × | × | × |

As shown in Table 1, it can be understood that Examples 1 to 7, particularly Examples 1 to 5, and among these, Examples 3 and 5 had sufficiently low viscosities and were able to be easily applied. In addition, during the actual measurement of sagging property as well, these Examples were easily applied, so that the work was able to be favorably conducted. Moreover, regarding the sagging property, they had favorable sagging properties regardless of the values of the viscosities of Examples 1 to 7. On the other hand, the resin compositions using the component (C') and the component (D') described in Table 2 had unsatisfactory sagging properties. In addition, even those that did not contain the component (D) and had high viscosities like Comparative Example 7 had a poor sagging property.

### Industrial Applicability

Since the resin composition of the present invention can effectively impart thixotropy regardless of viscosity, thus has favorable workability, and can be developed in various applying methods, the resin composition of the present invention is very useful.

## Claims

1. A resin composition comprising:
one or more base polymers selected from the group consisting of (A) a polymer having two or more alkenyl groups and (B) a polyorganosiloxane having a hydroxyl group bound to a silicon atom;
(C) a silica powder surface-treated with an alkyl silane; and
(D) a compound comprising one or more elements selected from the group consisting of boron, phosphorus, sulfur, and nitrogen.

2. The resin composition according to claim 1, wherein
the component (D) is an acid or an acid ester compound.

3. The resin composition according to claim 1, wherein
the component (D) is selected from the group consisting of boric acid, borate ester, phosphoric acid, phosphate ester, sulfuric acid, and nitric acid.

4. The resin composition according to any one of claims 1 to 3, wherein
the silica powder of the component (C) is a fumed silica powder.

5. The resin composition according to any one of claims 1 to 4, wherein
the component (C) is a silica powder surface-treated with octyl-silane.

6. The resin composition according to any one of claims 1 to 5, wherein
the component (A) is a vinyl polymer (A-1) having two or more alkenyl groups or a polyorganosiloxane (A-2) having two or more alkenyl groups.

7. The resin composition according to any one of claims 1 to 6, wherein
a mass ratio of the component (C) : the component (D) is 9:1 to 1:9.

8. A curable resin composition comprising:
the resin composition according to any one of claims 1 to 7;
a cross-linking agent; and
a curing catalyst.

9. A cured product obtained by curing the curable resin composition according to claim 8.

10. An adhesive comprising:
the curable resin composition according to claim 8.

11. A sealant comprising:
the curable resin composition according to claim 8.

12. A method for producing a resin composition comprising:
mixing
one or more base polymers selected from the group consisting of (A) a polymer having two or more alkenyl groups and (B) a polyorganosiloxane having a hydroxyl group bound to a silicon atom,
(C) a silica powder surface-treated with an alkyl silane, and
(D) one or more compounds selected from the group consisting of acids each comprising one or more elements selected from the group consisting of boron, phosphorus, sulfur, and nitrogen, and derivatives thereof.

13. A method for producing a cured product comprising the steps of:
producing a resin composition by mixing
one or more base polymers selected from the group consisting of (A) a polymer having two or more alkenyl groups and (B) a polyorganosiloxane having a hydroxyl group bound to a silicon atom,
(C) a silica powder surface-treated with an alkyl silane, and
(D) one or more compounds selected from the group consisting of acids each comprising one or more elements selected from the group consisting of boron, phosphorus, sulfur, and nitrogen, and derivatives thereof;
mixing the resin composition with a cross-linking agent and a curing catalyst; and
producing a cured product by curing the resin composition, under a condition of a curing temperature of 30 to 300°C in a case where the component (A) is used as the base polymer, or under a condition of a curing temperature of 10 to 50°C in the presence of water vapor in a case where the component (B) is used as the base polymer.
